Europäisches Patentamt

European Patent Office

Office européen des brevets

(11) Publication number: **0 290 823 B1**

(12) **EUROPEAN PATENT SPECIFICATION**

(45) Date of publication of patent specification: **23.12.92**    (51) Int. Cl.⁵: **G11B 5/127**

(21) Application number: **88106201.2**

(22) Date of filing: **19.04.88**

(54) **Magnetic head assembly for perpendicular magnetic recording.**

(30) Priority: **15.05.87 JP 117267/87**

(43) Date of publication of application:
**17.11.88 Bulletin 88/46**

(45) Publication of the grant of the patent:
**23.12.92 Bulletin 92/52**

(84) Designated Contracting States:
**DE FR GB**

(56) References cited:
**EP-A- 0 099 124**
**EP-A- 0 166 818**
**US-A- 3 673 353**
**US-A- 3 686 468**
**US-A- 4 156 882**

(73) Proprietor: **International Business Machines Corporation**
**Old Orchard Road**
**Armonk, N.Y. 10504(US)**

(72) Inventor: **Sueoka, Kuniaki**
**Mochidaheim 107, 4-1-29 Saginuma**
**Miyamae-ku**
**Kawasaki-shi Kanagawa-ken(JP)**

(74) Representative: **Atchley, Martin John Waldegrave**
**IBM United Kingdom Limited Intellectual Property Department Hursley Park**
**Winchester Hampshire SO21 2JN(GB)**

## Description

This invention relates to a magnetic head assembly for perpendicular magnetic recording the assembly being of the so-called single magnetic pole type which is, in use, disposed entirely on one side of a magnetic recording medium.

Demands for high density recording are increasing in response to increased amounts of information. In the field of magnetic recording, perpendicular recording systems have been proposed to meet such requirements, and are presently being studied. In perpendicular recording systems, recording is performed in the thickness direction of the recording medium, and unlike conventional in-plane magnetic recording systems, demagnetizing fields do not increase even under a high density recording condition, thus written recording patterns are not demagnetized, and better quality recording can be achieved.

Figure 7 of the accompanying drawings represents a typical conventional perpendicular read/write magnetic head assembly. Such an assembly is described in National Convention Record, 1983 the Institute of Electronics and Communication Engineers of Japan, Part 1, p.195 and in EP-A-0 166 818. This magnetic head assembly has magnetic poles on only one side of the recording medium, and is of a so-called single magnetic pole type. In this type of magnetic head assembly, a recording medium does not need to be supported between the magnetic poles and this arrangement provides good handling. In Figure 7, a nonmagnetic substrate 1 is provided with a main magnetic pole 2, and a magnetizing core 3 is formed on the main magnetic pole 2. A read/write coil 4 is wound around the non-magnetic substrate 1, the main magnetic pole 2 and the magnetizing core 3. An auxiliary magnetic pole 5 is disposed on the side of the magnetizing core 3 remote from the main magnetic pole 2. The auxiliary pole 5 provides a return path for the magnetic flux.

The recording medium 6 may be composed, for example, of a perpendicular magnetizing film 7, a high-permeability magnetic layer 8 and a substrate 9.

In perpendicular magnetic recording, the magnetization volume of each recording pattern in the magnetic recording medium decreases with the increase of recording density. For this reason, an efficient magnetic head is required. Also, in high density recording, since information transfer speed is high, the high frequency characteristics of the magnetic head assembly, being an electromagnetic transducer, must be improved.

In order to improve the efficiency of the arrangement of Figure 7, the distance "a" between the magnetizing core 3 and the leg of the auxiliary magnetic pole 5 is decreased, the width "b" of the leg of the auxiliary magnetic pole 5 is increased, or the distance "c" between the end of the leg of the auxiliary magnetic pole 5 and the recording medium 6 is decreased. In these cases, however, pulse noise caused by the edge of the auxiliary magnetic pole 5 facing the recording medium 6 increases, resulting in the error rate of the system becoming higher. Also, in order to improve the high frequency characteristics of the magnetic head assembly, the inductance of the auxiliary magnetic pole 5 is decreased. That is, distance "a" is decreased to decrease the volume of the auxiliary magnetic pole 5. However, in this aspect also, it is difficult to obtain an optimum magnetic head in terms of pulse noise.

This invention seeks to provide a magnetic head assembly of a single magnetic pole type for perpendicular magnetic recording, which reduces the problems of pulse noise caused by the edge of the auxiliary magnetic pole without sacrificing magnetic path efficiency and high frequency characteristics.

This object is acheived by a magnetic head assembly for perpendicular magnetic recording comprising a main magnetic pole, a coil magnetically coupled to the main magnetic pole and an auxiliary pole disposed alongside the main magnetic pole for forming a return path for magnetic flux which is characterised, according to the invention, by the permeability of the auxiliary magnetic pole increasing progressively with distance from its side adjacent to the main magnetic pole up to its centre and then decreasing progressively with distance from its centre to its side remote from the main magnetic pole.

It is noted that US-A-3 673 353 discloses a transducer with a laminated core, the inner laminations having a higher permeability than the outer ones. This transducer, however, is not intended for perpendicular recording and the purpose of the laminations is quite different from that of the present invention.

Variation of permeability can result from damage caused by ion beams, changes in stress, or changes in composition. When the auxiliary magnetic pole is constituted by a lamination of thin films, the thin films can have different compositions.

How the invention can be carried out will now be described by way of example, with reference to Figures 1 to 6 of the accompanying drawings, in which:-

Figure 1 represents a partial cross-section of a magnetic head assembly embodying the invention and a magnetic recording medium;

Figure 2 is a plan of the combination of Figure 1;

Figure 3 represents the permeability profile of the auxiliary pole in the magnetic head assembly of Figure 1;

Figure 4 is a diagram illustrating how the permalloy composition can be varied to achieve the permeability profile of Figure 3;

Figures 5A and 5B are diagrams illustrating the profiles of magnetic fields produced by a magnetic head assembly embodying the invention and a conventional magnetic head assembly, respectively; and

Figures 6A and 6B are diagrams illustrating the amount of peak shift produced by an embodiment of the invention and a conventional magnetic head assembly, respectively.

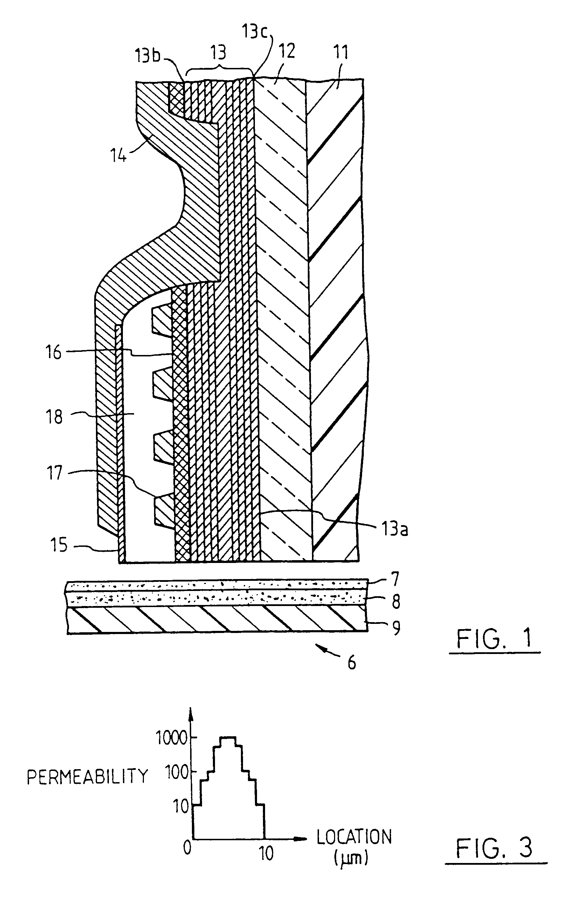

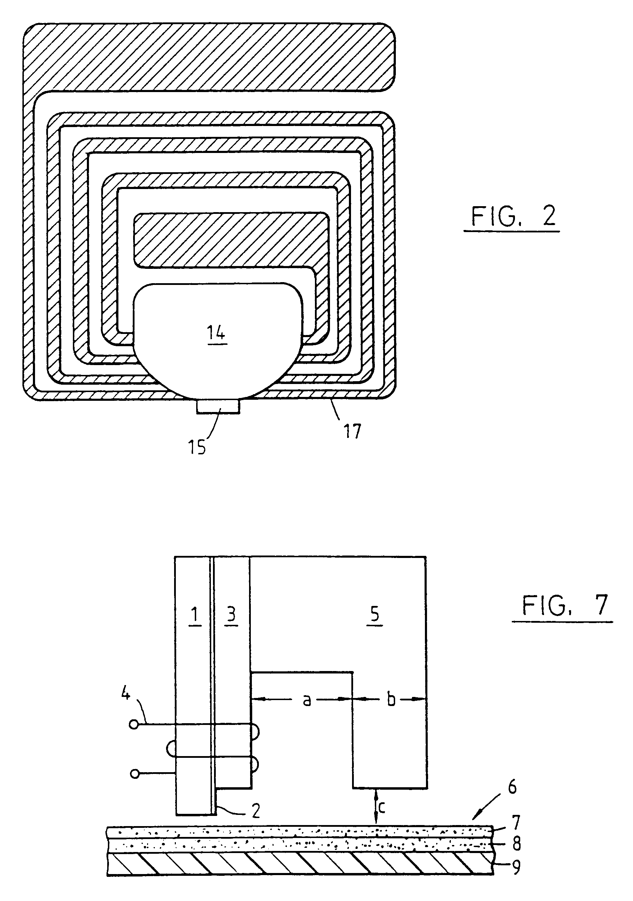

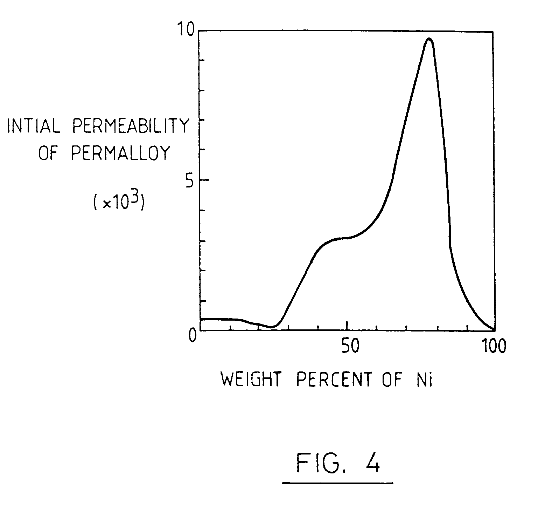

In a magnetic head assembly (Figures 1 and 2), an auxiliary magnetic pole 13 is provided on an insulation layer 12 consisting of $Al_2O_3$ disposed on a substrate 11 consisting of TiC and $Al_2O_3$. The auxiliary magnetic pole 13 consists of permalloy, and is formed by laminating thin permalloy films 13a sequentially. The outer ones of the permalloy films 13a have relatively lower permeabilities, and the permeability distribution of the films is shown in Figure 3 (in the c.g.s. unit, absolute number). This permeability distribution can be obtained by damage using ion beams, by stress or by varying composition. When the quantity of Ni in the permalloy is varied, its permeability varies as Figure 4 shows. The permeability distribution of Figure 3 is obtained by controlling the Ni content. That is, the compositions of film forming materials used for sputtering or plating are changed.

A magnetizing core 14 is connected to the auxiliary magnetic pole 13, and a main magnetic pole 15 is in turn connected to the magnetizing core 14. The magnetizing core 14 and the main magnetic pole 15 consist of permalloy, and particularly, the main magnetic pole 15 has a high saturation magnetic flux density. The auxiliary magnetic pole 13 is provided with a copper coil 17 disposed on an insulation layer 16 made of $Al_2O_3$. A spacer 18, consisting of photoresist, is provided between the coil 17 and the magnetizing core 14 and the main magnetic pole 15.

In this magnetic head assembly, the end face of the auxiliary magnetic pole 13 is at the same level as the end face of the main magnetic pole 15. Thus, the end face of the auxiliary magnetic pole 13 can be positioned very close to the recording medium 6. Consequently, flux from the main magnetic pole 15 can be returned efficiently, and the volume (length) of the magnetic path can be reduced. Also, the end face of the auxiliary magnetic pole 13 is flat. This results in a simple mask alignment for forming thin films 13a.

For fabrication of such a magnetic head assembly, the substrate 11 is first coated with the insulation layer 12. The films 13a, composing the auxiliary magnetic pole 13, are sequentially laminated on the insulation layer 12. The auxiliary magnetic pole 13 is in turn coated with the insulation layer 16, and coil 17 is formed on insulation layer 16 using a thin film patterning technique. A photoresist is then deposited and portions of the photoresist not required are removed using a photo-lithography technique and the spacer 18 is thereby formed. Next, a hole is made in the auxiliary magnetic pole 13 using dry etching at the location where the auxiliary magnetic pole 13 is to make connection with the magnetizing core 14. A permalloy film is then formed as the main magnetic pole 15, which is subjected to patterning. Finally, the magnetizing core 14 is formed. Although it is not shown in the drawings, a protective layer is finally provided.

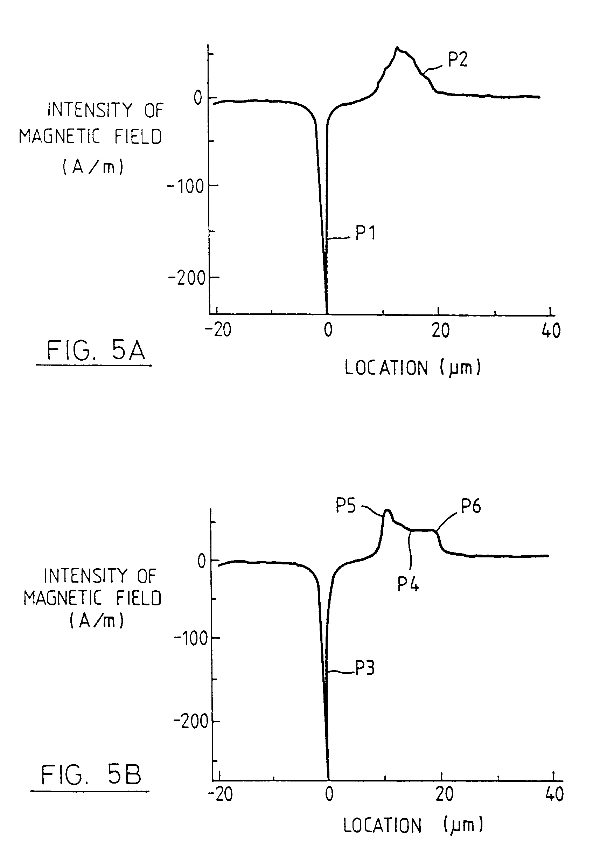

Figure 5A shows the profile of the magnetic field formed by the magnetic head assembly constituted as described above. The steep peak P1 to the negative direction corresponds to the main magnetic pole 15. The gentle peak P2 in the positive direction corresponds to the auxiliary magnetic pole 13. The peak P2 has fine fluctuations, which are caused by the interfaces between thin permalloy films 13a.

Figure 5B shows the profile of the magnetic field obtained by a magnetic head assembly having an auxiliary magnetic pole 13 with a uniform permeability. Peak P3 corresponds to the magnetic pole 15 as in Figure 5A. The peak P4 corresponds to the auxiliary magnetic pole 13. In this example, steep peaks P5 and P6 caused by the edge of the auxiliary magnetic pole 13 are overlapped onto the peak P4. The reason why such peaks P5 and P6 are not present in Figure 5A is that the permeability in the auxiliary magnetic head 13 is gradually spatially varied.

When a magnetic head assembly having the characteristics shown in Figure 5B, is used, pulse noise caused by peaks P5 and P6 occurs in read signals. This noise changes the location of the information bit pulse, that is, the noise causes peak shift, which increases the error rate.

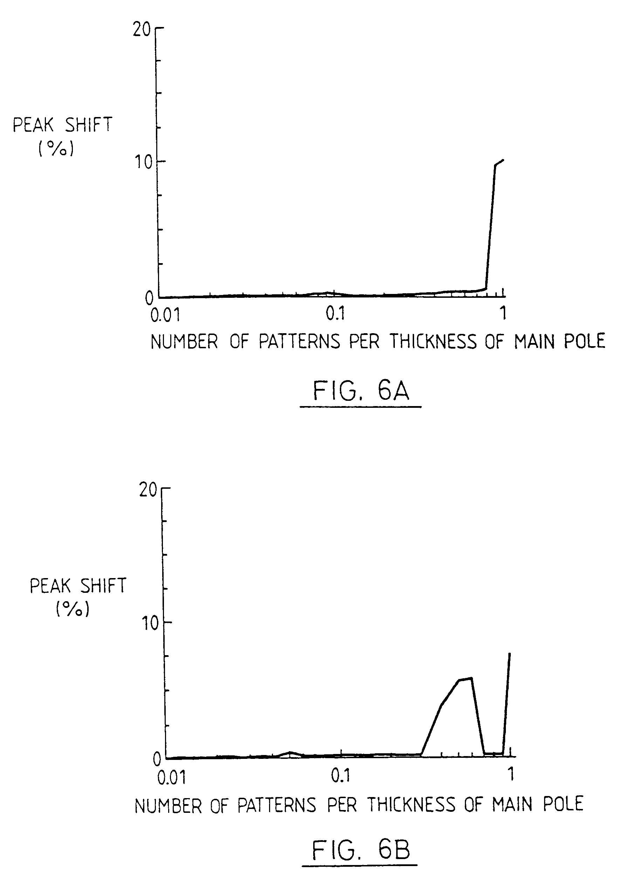

Figure 6B shows the peak shift when an all-1 pattern is recorded using a magnetic head assembly having the characteristics shown in Figure 5B. As is clearly seen in Figure 6B, the amount of peak shift increases rapidly when the number of patterns written per the thickness of the main magnetic pole (0.5 $\mu$m) increases to about 0.3 (15 KBPI). On the contrary, the magnetic head assembly of the embodiment of this invention has a small amount of peak shift until the number of patterns increases to about 0.8 (40 KBPI), as Figure 6A shows, and few errors occur even in high density recording.

As explained above, the problems of pulse noise caused by the edge of the auxiliary magnetic pole can be solved by spatially varying the permeability of the auxiliary magnetic pole. Consequently, it is not necessary to retract the end of the auxiliary magnetic pole from the recording medium, nor to increase the volume of the magnetic path, thus many design choices are available. When the end of the auxiliary magnetic pole is positioned close to the recording medium, an efficient magnetic head assembly can be provided, and when the volume of the magnetic path is reduced, high frequency characteristics can be improved.

## Claims

1. A magnetic head assembly for perpendicular magnetic recording comprising a main magnetic pole (15), a coil (17) magnetically coupled to the main magnetic pole and an auxiliary pole (13) disposed alongside the main magnetic pole for forming a return path for magnetic flux, characterised by the permeability of the auxiliary magnetic pole increasing progressively with distance from its side (13b) adjacent to the main magnetic pole up to its centre and then decreasing progressively with distance from its centre to its side (13c) remote from the main magnetic pole.

2. A magnetic head assembly as claimed in claim 1, in which the auxiliary magnetic pole has a plurality of regions, each individual region being of a uniform permeability determined by the composition of the magnetic material from which that region is formed.

3. A magnetic head assembly as claimed in claim 2, in which the auxiliary magnetic pole consists of a lamination of magnetic thin films, each of said regions consisting of a respective one of said thin films.

4. A magnetic head assembly as claimed in any preceding claim, in which the end face of the auxiliary magnetic pole is level with the end face of the main magnetic pole.

## Patentansprüche

1. Magnetkopfanordnung für senkrechte Magnetaufzeichnung, mit einem Magnethauptpol (15), mit einer magnetisch mit dem Magnethauptpol gekoppeltes Spule (17) und mit einem Hilfspol (13), welcher zur Bildung eines Rückflußpfades für den Magnetfluß längs des Magnethauptpoles angeordnet ist, dadurch gekennzeichnet, daß die Permeabilität des Magnethilfspoles mit der Entfernung von seiner dem Magnethauptpol benachbartgelegenen Seite (13 b) progressiv bis zu seiner Mitte zunimmt und sodann mit der Entfernung von seiner Mitte bis zu seiner von dem Magnethauptpol abgelegenen Seite (13c) progressiv abnimmt.

2. Magnetkopfanordnung nach Anspurch 1, bei welcher der Magnethilfspol eine Mehrzahl von Bereichen aufweist, wobei jeder einzelne Bereich eine gleichmäßige Permeabilität besitzt, welche durch die Zusammensetzung des magnetischen Materials aus dem der Bereich gebildet ist, bestimmt ist.

3. Magnetkopfanordnung nach Anspruch 2, bei welchem der Magnethilfspol aus einem Laminat dünner magnetischer Filme besteht, wobei jeder der genannten Bereiche aus einem entsprechenden der dünnen Filme besteht.

4. Magnetkopfanordnung nach einem der vorgehenden Ansprüche, bei welchem die Endstirnfläche des Magnethilfspoles in einer Ebene mit der Endstirnfläche des Magnethauptpoles liegt.

## Revendications

1. Assemblage de tête magnétique pour l'enregistrement perpendiculaire magnétique comprenant un pôle magnétique principal (15), une bobine (17) magnétiquement couplée au pôle magnétique principal et un pôle auxiliaire (13) disposé le long du côté du pôle magnétique principal pour former un trajet de retour pour le flux magnétique, caractérisé par la perméabilité du pôle magnétique auxiliaire augmentant progressivement avec la distance depuis son côté (13b) contigu au pôle magnétique principal jusqu'à son centre et diminuant ensuite progressivement avec la distance de son centre à son côté (13c) opposé au pôle magnétique principal.

2. Assemblage de tête magnétique selon la revendication 1, dans lequel le pôle magnétique auxiliaire comporte une pluralité de régions, chaque région individuelle étant d'une perméabilité uniforme déterminée par la composition du matériau magnétique à partir duquel cette région est formée.

3. Assemblage de tête magnétique selon la revendication 2, dans lequel le pôle magnétique auxiliaire est constitué d'un empilage de films minces magnétiques, chacune desdites régions étant constituée d'un film mince respectif parmi lesdits films minces.

4. Assemblage de tête magnétique selon l'une quelconque des revendications précédentes, dans lequel la surface terminale du pôle magnétique auxiliaire est au niveau de la surface terminale du pôle magnétique principal.

FIG. 1

FIG. 3

FIG. 2

FIG. 7

FIG. 4

FIG. 5A

INTENSITY OF
MAGNETIC FIELD
(A/m)

P2

P1

LOCATION (μm)

FIG. 5B

INTENSITY OF
MAGNETIC FIELD
(A/m)

P5

P6

P4

P3

LOCATION (μm)

FIG. 6A

FIG. 6B